(19) Europäisches Patentamt

European Patent Office

Office européen des brevets

(11) **EP 0 539 750 B1**

(12) **EUROPÄISCHE PATENTSCHRIFT**

(45) Veröffentlichungstag und Bekanntmachung des Hinweises auf die Patenterteilung:
**27.11.1996 Patentblatt 1996/48**

(51) Int Cl.6: **H04B 17/00**, H04L 25/30

(21) Anmeldenummer: **92116794.6**

(22) Anmeldetag: **01.10.1992**

(54) **Verfahren zum Bestimmen der komplexen Impulsantwort eines Funkkanals**

Method for determining the complex pulse response of a radio channel

Procédé de détermination de la réponse impulsionelle complexe d'un canal radio

(84) Benannte Vertragsstaaten:
**DE FR GB IT SE**

(30) Priorität: **31.10.1991 DE 4135953**

(43) Veröffentlichungstag der Anmeldung:
**05.05.1993 Patentblatt 1993/18**

(73) Patentinhaber: **Rohde & Schwarz GmbH & Co. KG**
**D-81671 München (DE)**

(72) Erfinder:
- **Riedel, Peter, Dipl.-Ing.**
  **W-8000 München 80 (DE)**
- **Stumpf, Martin, Dipl.-Ing.**
  **W-8000 München 71 (DE)**
- **Wanierke, Otmar**
  **O-6801 Arnsbach 52 (DE)**

(74) Vertreter: **Graf, Walter, Dipl.-Ing.**
**Sckellstrasse 1**
**81667 München (DE)**

(56) Entgegenhaltungen:
**EP-A- 0 412 616        EP-A- 0 428 199**

- **PROCEEDINGS OF THE IEEE Bd. 73, Nr. 9, September 1985, NEW YORK US,Seiten 1349 - 1387;SHAHID U.H. QURESHI:'adaptive equalization'**
- **ITG-FACHBERICHTE Bd. 107, 1989, NÜRNBERG Seiten 363-368; ALFRED BAIER:'CORRELATIVE AND ITERATIVE CHANNEL ESTIMATION IN ADAPTIVE VITERBI EQUALIZERS FOR TDMA MOBILE RADIO SYSTEMS'**

EP 0 539 750 B1

**Beschreibung**

Die Erfindung betrifft ein Verfahren zum Bestimmen der komplexen Impulsantwort eines Funkkanals, beispielsweise der Impulsantwort von Funkkanälen eines digitalen Mobilfunknetzes (GSM-Netz).

Bei Funknetzen, bei denen von einem oder mehreren Sendern Funksignale zu einem Empfänger übertragen werden, kommt es durch Mehrwegausbreitung zu Störungen, die durch die sogenannte komplexe Impulsantwort des Funkkanals ausgedrückt werden können. Bei digitalen Mobilfunknetzen, z.B. den sogenannten GSM-Funknetzen, machen sich diese Störungen durch Mehrwegausbreitung als sogenannte Intersymbolinterferenzen bemerkbar. Wenn die Impulsantwort des Funkkanals länger als die Dauer der über den Funkkanal übertragenen Bit's ist werden Signalanteile des Empfangssignals, die zu einem Symbol gehören, durch Anteile von vorher gesendeten Symbolen gestört.

Zum Messen der komplexen Impulsantwort ist es bekannt, über eine speziellen Meßsender in den zu vermessenden Funkkanal ein spezielles Testsignal einzuspeisen und über das am Empfänger gemessene Empfangssignal durch Korrelation mit dem gesendeten Testsignal die Impulsantwort des Funkkanals zu bestimmen

(S. Hermann, U. Martin, R. Reng, H.,W. Schüßler, K. Schwarz:
"Ein System für Ausbreitungsmessungen in Mobilfunkkanälen - Grundlagen und Realisierung", Kleinheubacher Berichte Nr. 34 (1991) S. 615-624;
G. Kadel, R.W. Lorenz:
"Breitbandige Ausbreitungsmessungen zur Charakterisierung des Funkkanals beim GSM-System", Frequenz Nr. 45 (1991) S. 158-163;
W. Plagge, D. Poppen:
"Neues Verfahren zur Messung der Kanalstoßantwort und Trägersynchronisation in digitalen Mobilfunkkanälen, Frequenz 44 (1990) S. 217-221;
J.-P. de Weck, J. Ruprecht:
"Real-Time ML Estimation of Very Frequency-Selective Multipath Channels", IEEE Global Telecommunications Conference GLOBECOM '90, December 1990)

Dieses bekannte Meßverfahren benötigt senderseitig einen speziellen Meßsender und setzt voraus, daß ein unbenutzter Funkkanal zur Verfügung steht. Dieses bekannte Verfahren ist daher relativ aufwendig.

Es ist daher Aufgabe der Erfindung, ein einfacheres Verfahren zum Bestimmen der komplexen Impulsantwort eines Funkkanals aufzuzeigen, bei dem insbesondere ein solcher zusätzlicher Meßsender überflüssig ist.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Bei dem erfindungsgemäßen Verfahren wird ein Signalabschnitt des über den Funkkanal übertragenen Nutzsignals zur Messung und Bestimmung der komplexen Impulsantwort ausgenutzt, so daß senderseitig ein gesonderter Meßsender überflüssig ist. Beim erfindungsgemäßen Verfahren ist außerdem eine Unterbrechung der Nutzsignal-Übertragung überflüssig, die Messung kann während des normalen Betriebes des Funknetzes durchgeführt werden. Das erfindungsgemäße Verfahren ist insbesondere geeignet für die Messung der Impulsantwort von Funkkanälen eines digitalen Mobilfunknetzes (GSM-Netz), in diesem Fall ist es von Vorteil, die Messung an einem der sogenannten Trainingssequenz-Signalabschnitte des Digitalsignales auszuführen, wie sie beispielsweise für das GSM-Netz in der "Recommendation GSM 05.02" der ETSI/PT 12 vom Januar 1990 unter Abschnitt 3.4.1 als Digitalsignal näher definiert sind und in jedem Rahmen des Digitalsignals an einer vorbestimmten Stelle als vorgegebener Signalabschnitt übertragen werden.

Beim erfindungsgemäßen Verfahren ist nicht unbedingt eine periodische Wiederholung des ausgewählten Signalabschnittes erforderlich, die Impulsantwort gemäß dem erfindungsgemäßen Verfahren kann auch nur ein einziges Mal aus einem einzigen ausgewählten Signalabschnitt bestimmt werden. Vorzugsweise werden jedoch mehrere aufeinanderfolgende Messungen an sich wiederholenden gleichen Signalabschnitten durchgeführt, hierdurch wird die Messung genauer. Als besonders vorteilhaft hat es sich erwiesen, diese Messung an periodisch sich wiederholenden Signalabschnitten durchzuführen, also an Signalabschnitten, die in gleichen Zeitabschnitten aufeinanderfolgend auftreten, wie dies für den erwähnten Trainingssequenz-Signalabschnitt des GSM-Netzes gilt.

Die Erfindung macht sich die Erkenntnis zunutze, daß zwischen der komplexen Impulsantwort, dem periodisch wiederkehrenden vorgegebenen Signalabschnitt des übertragenen Nutzsignals und dem empfangsseitig gemessenen Signal ein linearer Zusammenhang besteht, der bei zeitdiskreter Betrachtung in Form einer Matrixmultiplikation ausgedrückt werden kann. Damit kann aus den vorgegebenen und gemessenen Signalen auf einfache Weise durch einen linearen Ansatz die komplexe Impulsantwort berechnet werden, wobei es sich laut einer Weiterbildung der Erfindung als besonders vorteilhaft erwiesen hat, bei dieser Berechnung noch einen entsprechenden Korrekturfaktor zu berücksichtigen, durch welchen Fehler, hervorgerufen durch Rauschen im gemessenen Empfangssignal, verkleinert werden können

Die Erfindung wird im folgenden anhand von Zeichnungen und Formeln am Beispiel eines sogenannten GSM-Mobilfunknetzes naher erläutert.

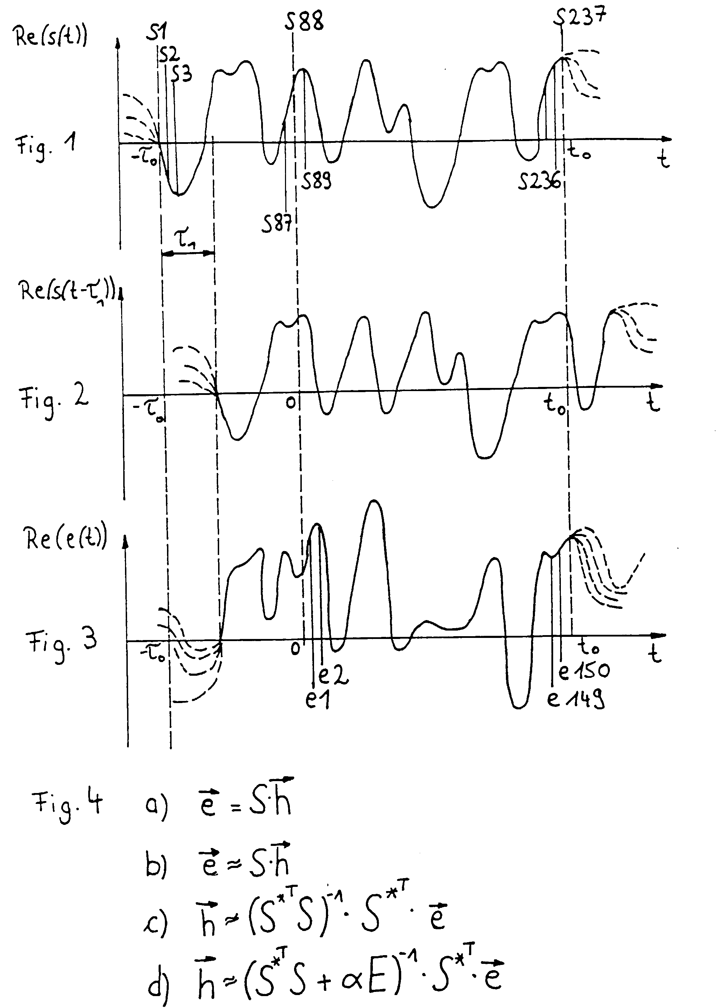

Im digitalen Mobilfunknetz GSM werden die zu übertragenden Bit's sendeseitig über Filter so verformt, daß ein verformtes Analogsignal entsteht, das mit geringer Bandbreite durch Frequenzmodulation über einen Funkkanal übertragen werden kann. Fig. 1 zeigt den als sogenannte Trainingssequenz bekannten analogen Signalabschnitt zwischen -τo und to, vor und hinter diesem Signalabschnitt werden andere gestrichelt angedeutete Nachrichtabschnitte übertragen. Es sei vorausgesetzt, daß die Impulsantwort des Funkkanales nicht länger als τo ist, das heißt, die Laufzeit eines vom Sender zum Empfänger auf einem Umweg übertragenen Signals soll gegenüber dem zwischen Sender und Empfänger direkt übertragenen Signal nicht länger als τo sein. Da dieser Abschnitt zwischen -τo und 0 durch die vorhergehenden unbekannten Signalabschnitte verfälscht werden kann, wird empfangsseitig von der empfangenen Trainingssequenz nur der Abschnitt zwischen 0 und to aus der insgesamt gesendeten Trainingssequenz gemessen und daraus die Impulsantwort berechnet.

Fig. 1 zeigt den auf direktem Wege empfangenen Signalabschnitt, Fig. 2 den um die Laufzeit τ1 demgegenüber zeitlich etwas verschobenen auf Umweg empfangenen Signalabschnitt und Fig. 3 zeigt das aus diesen beiden Signalabschnitten zusammengesetzt und im Empfänger gemessene Kombinationssignal. Im Bereich zwischen 0 und to besteht zwischen dem empfangenen Signal e, dem Signalabschnitt s und der Impulsantwort $\vec{h}$ ein linearer Zusammenhang, der in Form einer Matrizenmultiplikation durch die Formel nach Fig. 4a ausgedrückt werden kann. Die Spalten der Matrix S sind die zeitlich verschobenen Sendesequenzen, der Vektor $\vec{h}$ ist die zeitdiskrete Impulsantwort und der Vektor $\vec{e}$ das empfangene Signal.

Da in der Praxis das gemessene Empfangssignal mehr oder weniger stark verrauscht ist und die Impulsantwort nicht unbedingt immer kürzer als τo ist und auch durch die diskrete Betrachtung der kontinuierlichen Signale Fehler auftreten, ist diese Beziehung nach Fig. 4a nicht exakt, sondern es gilt die Beziehung nach Fig. 4b. Zur Berechnung der komplexen Impulsantwort $\vec{h}$ aus den gemessenen Werten des Signals e wird daher eine lineare Approximation nach der Beziehung gemäß Fig. 4c angewendet, wobei S die Matrix der vorgegebenen Trainingssequenz s ist, die in bekannter Weise aus dem Vektor s des analogen Sendesignals s(t) aufgestellt wird, $S^{*T}$ die transponierte (zeilen- und spaltenvertauschte) konjugiert komplexe Matrix zu der Matrix S ist und der Vektor $\vec{e}$ die jeweils gemessenen Abtastwerte des Empfangssignales von 0 bis to enthält.

Diese für die Berechnung der komplexen Impulsantwort $\vec{h}$ erforderlichen Werte werden in der Praxis beispielsweise wie folgt gewonnen.

Der vorgegebene Trainingssequenzabschnitt nach Fig. 1 zwischen -τo und $t_0$ wird senderseitig digitalisiert, d.h. es werden beispielsweise von diesem Abschnitt 237 digitale Abtastwerte s1 bis s237 durch Abtastung gewonnen. Die Werte s1...s237 sind komplex. Real- und Imaginärteil entsprechen den Inphase- bzw. Quadraturphase-Komponenten eines für die Messung notwendigen I/Q-Demodulators. Aus diesen Abtastwerten wird dann die Matrix S für diesen Trainingssequenzabschnitt aufgestellt nach der Beziehung:

$$S = \begin{bmatrix} s88 & s87 & . & . & . & . & . & . & . & s1 \\ s89 & s88 & . & . & . & . & . & . & . & s2 \\ . & . & . & . & . & . & & & & . & . \\ . & . & . & . & . & . & & & & . & . \\ . & . & . & . & . & . & & & & . & . \\ . & . & . & . & . & . & & & & . & . \\ s237 & S236 & . & . & . & . & . & . & . & s150 \end{bmatrix}$$

Eine andere Möglichkeit der Aufstellung der Matrix S dieses Signalabschnittes nach Fig. 1 auf der Sendeseite besteht darin, aus den vorgegebenen Normdaten der Trainingssequenz die Abtastwerte s1...s237 ihrer analogen komplexen Einhüllenden zu berechnen.

Die so durch Messung oder durch Rechnung bestimmte Matrix S wird dann in einem Speicher eines Meßempfängers abgespeichert.

In dem empfangsseitig aufgesellten Meßempfänger wird der Signalabschnitt zwischen 0 und $t_0$ gemäß Fig. 3 wiederum durch Abtastung digitalisiert, d.h. es werden beispielsweise durch 150 Abtastungen an dem empfangenen Signal die einzelnen komplexen Abtastwerte e1 bis e150 ermittelt und aus diesen digitalen Werten wird dann der Vektor $\vec{e}$ dieses Signalabschnittes gewonnen, der Vektor $\vec{e}$ ist also durch die Gesamtheit dieser Abtastwerte e1 bis e150 bestimmt. (Diese sind wieder komplex, so daß z.B. e1 = (Re(e1), Im(e1)) geschrieben werden kann.)

Mit einem dem Meßempfänger zugeordneten Rechner wird dann nach der in Fig. 4c angegebenen Formel aus der abgespeicherten Matrix S, der konjugiert komplexen Matrix $S^{*T}$ und dem Vektor $\vec{e}$ die komplexe Impulsantwort $\vec{h}$ berechnet.

Bei dem erfindungsgemäßen Verfahren ist es also nur nötig, von einem Signalabschnitt des über den Funkkanal übertragenen Nutzsignales, beispielsweise dem sogenannten Trainingssequenzabschnitt eines Nutzsignales, senderseitig dessen Matrix S zu bestimmen und empfangsseitig durch Abtastung den Vektor $\vec{e}$ des empfangsseitigen Signalabschnittes zu bestimmen und daraus dann durch Rechnung nach der angegebenen Formel die Impulsantwort zu berechnen. Die berechnete Impulsantwort kann dann unmittelbar graphisch dargestellt oder für weitere Verwendung in einem Speicher abgelegt werden. Damit kann ohne Unterbrechung des Funkbetriebes beispielsweise eines Mobilfunknetzes die Qualität der Signalübertragung in den einzelnen Funkkanälen bestimmt und ausgewertet werden. Für die empfangsseitige Messung ist jeder Empfänger geeignet, aus dessen demoduliertem Analogsignal nach Fig. 3 durch Abtastung unmittelbar der Vektor e bestimmt werden kann.

Diese Beziehung ist allerdings nur ohne Berücksichtigung von Rauschen eine gute Näherung für die Kanalimpulsantwort $\vec{h}$.

Gemäß einer Weiterbildung der Erfindung wird daher für die Berechnung der Impulsantwort die Beziehung nach Fig. 4d benutzt, nach welcher ein zusätzlicher positiver Korrekturfaktor $\alpha$ mit einer diagonal dominanten Einheitsmatrix E eingefügt wird. Damit werden Fehler durch Rauschen im Empfangssignal ausgeglichen und optimale Rauschunterdrückung erreicht. Der Faktor $\alpha$ hängt vom Rauschpegel ab, je größer $\alpha$ gewählt wird, umso besser ist an sich die Stabilität gegenüber Rauscheinflüssen, allerdings wird mit wachsendem $\alpha$ auch die Erwartungstreue verschlechtert. Der Korrekturfaktor $\alpha$ wird deshalb an die jeweilige Empfangssituation angepaßt. Das Eingangsrauschen kann beispielsweise über den Empfangspegel abgeschätzt werden, für kleine Empfangsfeldstärke wird größeres Rauschen vorausgesetzt und damit der Faktor $\alpha$ entsprechend größer gewählt. Für einen Rauschanteil bis zu 30 % liegt $\alpha$ zwischen 0 und 1. Bei kleinem Rauschen sind schon sehr kleine Werte für $\alpha$ ausreichend, um das Verfahren gegen diese Störungen zu desensibilisieren (1% Rauschanteil $\alpha = 0{,}001$).

Bei Anwendung dieser Weiterbildung wird im Speicher des Meßempfängers gleich die resultierende Matrix nach Fig. 4d gespeichert, die ja durch Berechnung der ursprünglich bestimmten Matrix S gebildet wird. Damit wird die anschließende Berechnung der Impulsantwort vereinfacht.

## Patentansprüche

1. Verfahren zum Bestimmen der komplexen Impulsantwort eines Funkkanals, insbesondere eines digitalen Mobilfunknetzes, dadurch **gekennzeichnet,** daß

    senderseitig von einem ausgewählten Signalabschnitt (-$\tau$o bis $t_o$) des über den Funkkanal übertragenen Nutzsignals aus vorgegebenen Daten dieses Signalabschnitts oder durch Abtastung dieses Signalabschnittes Abtastwerte (s1 bis s237) gewonnen werden,

    daraus von einem Teilabschnitt (0 bis $t_o$) mehrere zeitlich verschobene Signal-Teilabschnitte (s88 bis s237, s87 bis s236, ....s1 bis s150) abgeleitet werden, welche die Spalten einer Matrix S bilden,

    und empfangsseitig
    aus Abtastwerten (e1 bis e150), die durch Abtastung eines dem senderseitig ausgewählten Teilabschnitt (0 bis $t_o$) entsprechenden Signalabschnitt gewonnen werden, der Signalvektor $\vec{e}$ bestimmt und daraus durch lineare Abbildung der Vektor $\vec{h}$ der gesuchten Impulsantwort nach folgender Beziehung berechnet wird:

$$\vec{h} = (S^{*T} \cdot S)^{-1} \cdot S^{*T} \cdot \vec{e}$$

    wobei $S^{*T}$ die transponierte konjugiert komplexe Matrix zur Matrix S ist.

2. Verfahren nach Anspruch 1, dadurch **gekennzeichnet,** daß bei der Berechnung der Impulsantwort ein Korrekturfaktor $\alpha$ mit einer diagonal dominanten Matrix E, insbesondere einer Einheitsmatrix, eingefügt wird nach der Beziehung:

$$\vec{h} = (S^{*T} \cdot S + \alpha E)^{-1} \cdot S^{*T} \cdot \vec{e}$$

3. Verfahren nach Anspruch 1 oder 2, dadurch **gekennzeichnet,** daß zur Bestimmung der Impulsantwort eines Funkkanales eines digitalen Mobilfunknetzes als ausgewänlten Signalabschnitt der Trainingssequenz-Signalabschnitt des Mobilfunknetzes benutzt wird.

## Claims

1. Method of determining the complex pulse response of a radio channel, in particular of a digital mobile radio network, characterised in that
on the transmitter side,

   for a selected signal section (-$\tau$o to $t_o$) of the wanted signal transmitted via the radio channel, from specified data of this signal section or by scanning of this signal section, scan values (s1 to s237) are obtained,

   therefrom, from a part section (0 to $t_o$) a plurality of signal part sections displaced in time (s88 to s237, s87 to s236,....s1 to s150) are derived, which form the columns of a matrix S,

   and on the receiver side
   from scan values (e1 to e150) which are obtained by scanning a signal section corresponding to the part section (0 to $t_o$) selected on the transmitter side, the signal vector $\vec{e}$ is determined and therefrom, by linear representation the vector $\vec{h}$ of the wanted pulse reply is calculated according to the following equation:

$$\vec{h} = (S^{*T} \cdot S)^{-1} \cdot S^{*T} \cdot \vec{e}$$

   in which case $S^{*T}$ is the transposed conjugatedly complex matrix to the matrix S.

2. Method according to claim 1, characterised in that in calculating the pulse response, a correction factor $\alpha$ with a diagonally dominant matrix E, in particular a unity matrix is inserted according to the equation:

$$\vec{h} = (S^{*T} \cdot S + \alpha E)^{-1} \cdot S^{*T} \cdot \vec{e}$$

3. Method according to claim 1 or 2, characterised in that in order to determine the pulse response of a radio channel of a digital mobile radio network, the training sequence signal section of the mobile radio network is used as the selected signal section.

## Revendications

1. Procédé pour déterminer la réponse impulsionnelle complexe d'un canal radio, notamment d'un réseau radio mobile numérique,
caractérisé en ce que

   du côté de l'émission, à partir d'un segment de signal choisi (-$\tau$o jusqu'à $t_o$) du signal utile transmis par le canal radio, à partir de données prédéterminées de ce segment de signal ou par détection de ce segment de signal, on forme des valeurs de détection (s1 ... s237),
   partant delà, pour un segment partiel (0 jusqu'à $t_o$), on déduit plusieurs segments partiels de signal (s88 ... s237, s87 ... s236, ... s1 ... s150) décalés dans le temps et qui forment les colonnes d'une matrice S,
   et du côté de la réception, à partir des valeurs de détection (e1 .. e150) obtenues par détection d'un segment de signal correspondant au segment partiel (0 jusqu'à $t_o$) choisi du côté de l'émission, on définit le vecteur signal ($\vec{e}$) et à partir de celui-ci, par combinaison linéaire, on calcule le vecteur ($\vec{h}$) de la réponse impulsionnelle recherchée en utilisant la relation suivante :

$$\vec{h} = (S^{*T} \cdot S)^{-1} \cdot S^{*T} \cdot \vec{e}$$

   dans laquelle $S^{*T}$ représente la matrice complexe conjuguée transposée de la matrice S.

**2.** Procédé selon la revendication 1,
caractérisé en ce que
pour le calcul de la réponse impulsionnelle, on insère un coefficient de correction ($\alpha$) avec une matrice diagonale dominante (E) notamment une matrice unitaire selon la relation :

$$\vec{h} = (S^{*T} \cdot S + \alpha E)^{-1} \cdot S^{*T} \cdot \vec{e}$$

**3.** Procédé selon la revendication 1 ou 2,
caractérisé en ce que
pour déterminer la réponse impulsionnelle d'un canal radio d'un réseau radio mobile numérique, on utilise comme segment de signal choisi, le segment de signal de la séquence d'entraînement du réseau radio mobile.

Re(s(t))

Fig. 1

S1
S2
S3
S88
S237
$-\tau_0$
$t_0$
S89
S236
S87

$\tau_1$

Re(s(t-$\tau_1$))

Fig. 2

$-\tau_0$
0
$t_0$

Re(e(t))

Fig. 3

$-\tau_0$
0
$t_0$
e2
e1
e150
e149

Fig. 4

a) $\vec{e} = S \cdot \vec{h}$

b) $\vec{e} \approx S \cdot \vec{h}$

c) $\vec{h} \approx (S^{*T}S)^{-1} \cdot S^{*T} \cdot \vec{e}$

d) $\vec{h} \approx (S^{*T}S + \alpha E)^{-1} \cdot S^{*T} \cdot \vec{e}$